# EUROPEAN PATENT APPLICATION

(11) **EP 4 434 670 A1**
(43) Date of publication of application: **25.09.2024**
(21) Application number: 22894854.3
(22) Date of filing: 16.11.2022
(51) Int. Cl.: B23P 19/02, B23P 21/00, B21D 53/08, F28F 1/32

(54) **METHOD AND DEVICE FOR PROCESSING HEAT EXCHANGER**

(30) Priority: 17.11.2021 CN 202111364678
(71) Applicant: Sanhua (Hangzhou) Micro Channel Heat Exchanger Co. Ltd, Zhejiang 310018 (CN)
(72) Inventor: WANG, Feng, Hangzhou Economic & Technological Development Area Hangzhou, Zhejiang 310018 (CN); GAO, Qiang, Hangzhou Economic & Technological Development Area Hangzhou, Zhejiang 310018 (CN); JIANG, Jianlong, Hangzhou Economic & Technological Development Area Hangzhou, Zhejiang 310018 (CN); ZHONG, Xiaoming, Hangzhou Economic & Technological Development Area Hangzhou, Zhejiang 310018 (CN)
(74) Representative: advotec.
(86) International application number: PCT/CN2022/132337
(87) International publication number: WO 2023/088322

(57) **Abstract**

A method and device for processing a heat exchanger. The heat exchanger processing device comprises: a first assembly (1), wherein the first assembly (1) is used for placing a flat tube group (10), the first assembly (1) comprises a limiting portion (11), a lengthwise direction of the first assembly (1) is defined as a first direction, and the limiting portion (11) is used for limiting the flat tube group (10) in the first direction; and a second assembly (2), wherein at least part of the second assembly (2) is movable in the first direction, a height direction of the first assembly (1) is defined as a second direction, at least part of the second assembly (2) is located above the first assembly (1) in the second direction, the second direction is perpendicular to the first direction, and the second assembly (2) comprises a clamping member (21), the clamping member (21) being used for clamping a fin group (20); and a press-fitting member (22), the press-fitting member (22) being connected to the clamping member (21), and the press-fitting member (22) being movable in the second direction so as to press-fit the fin group (20) onto the flat tube group (10) in the second direction.

## Description

### CROSS-REFERENCE TO RELATED APPLICATION

This application claims priority to and benefits of Chinese Patent Application Serial No. 202111364678.4 filed on November 17, 2021, the entire content of which is incorporated herein by reference.

### FIELD

The present disclosure relates to the field of hate exchange technologies, and more particularly to a heat exchanger processing method and a heat exchanger processing device.

### BACKGROUND

In the related art, a fin of a transversely inserted finned microchannel heat exchanger has a slot, and a microchannel flat tube is inserted into the slot of the fin. An assembly method of the transversely inserted finned microchannel heat exchanger is different from a traditional microchannel heat exchanger. When manufacturing the transversely inserted finned heat exchanger, the collected fins are assembled integrally onto the flat tube of the heat exchanger at one time. For the transversely inserted finned heat exchanger with a large dimension, the fins are prone to deform due to the excessive number of fins assembled at one time in the manufacturing process, which then affects an assembly affect.

### SUMMARY

Embodiments of the present application proposes a heat exchanger processing method, which can achieve an installation and coordination of fins with a flat tube in batches, which is conducive to positioning, reduces an influence of heat exchanging tube dimension, and can improve a processing efficiency of the heat exchanger.

The embodiments of the present application proposes a heat exchanger processing device, which can be applicable to heat exchangers of various dimensions and has advantages of good universality and improved assembly efficiency of the heat exchanger.

The heat exchanger processing method of the embodiments of the present application includes following steps:
S 100, providing a plurality of microchannel flat tubes, wherein the plurality of the microchannel flat tubes are spaced apart along their thickness direction, and the plurality of the microchannel flat tubes form a flat tube group;
S200, limiting the flat tube group in a first direction, limiting the flat tube group in a third direction, in which a length direction of the flat tube group is defined as the first direction, a thickness direction of the flat tube group is defined as the third direction, and the first direction is perpendicular to the third direction;
S300, providing a plurality of fins, in which the fin includes a plurality of slot holes spaced apart along a length direction of the fin, the slot hole penetrates through the fin along a thickness direction of the fin, the plurality of the fins are spaced apart along the first direction, the plurality of the fins form a fin group, a length direction of the fin group is parallel to the third direction, and a thickness direction of the fin group is parallel to the first direction;
S400, moving one fin group to a position above a first installation position of the flat tube group, so that a width direction of the slot hole of the fin is parallel to a width direction of the flat tube group;
S500, defining a second direction perpendicular to the first direction and the third direction, in which the width direction of the flat tube group is parallel to the second direction; and moving the fin group along the second direction to make the fin group contact with the flat tube group, and to insert the plurality of the microchannel flat tubes into the plurality of the slot holes of the fin group, with one microchannel flat tube inserted into one slot hole;
S600, providing a second fin group, moving the second fin group to a position above a second installation position of the flat tube group, moving the second fin group along the second direction to make the second fin group contact with the flat tube group, and to insert the plurality of the microchannel flat tubes into the plurality of the slot holes of the fin group, with one microchannel flat tube inserted into one slot hole; or
S700, providing a second fin group, moving the second fin group and the flat tube group to move the second fin group to a position above a second installation position of the flat tube group, moving the second fin group along the second direction to make the second fin group contact with the flat tube group, and to insert the plurality of the microchannel flat tubes into the plurality of the slot holes of the fin group, with one microchannel flat tube matched with one slot hole.

The heat exchanger processing method of the embodiments of the present application has the advantages of high assembly quality and high assembly efficiency.

In some embodiments, step S600 is repeated until an installation of N fin groups with one flat tube group is completed, where N is greater than or equal to 2.

In some embodiments, step S700 is repeated until an installation of N fin groups with one flat tube group is completed, where N is greater than or equal to 2.

In some embodiments, in step S400, one fin group is moved along the first direction by a first preset distance to move the fin group to a position above the first installation position of the flat tube group, where the first preset distance is greater than 0;
in step S600, the second fin group is moved by a second preset distance along the first direction to move the second fin group to a position above the second installation position of the flat tube group.

In some embodiments, in step S400, one fin group is moved by the first preset distance along the first direction to move the fin group to a position above the first installation position of the flat tube group, where the first preset distance is greater than 0;
in step S700, the second fin group is moved along the first direction by the second preset distance, and the flat tube group is moved along the first direction by a third preset distance, so as to move the second fin group to a position above the second installation position of the flat tube group.

In some embodiments, in step S600, a difference between the second preset distance and the first preset distance is greater than or equal to a maximum dimension of the fin group in the first direction.

In some embodiments, in step S700, a sum of the second preset distance and the third preset distance is L, and a difference between L and the first preset distance is greater than or equal to a maximum dimension of the fin group in the first direction.

In some embodiments, a difference between the second preset distance and the third preset distance is L, and a difference between L and the first preset distance is greater than or equal to a maximum dimension of the fin group in the first direction.

The heat exchanger processing device of the embodiments of the present application includes: a first assembly for placing a flat tube group, in which the first assembly includes a limiting portion, a length direction of the first assembly is defined as a first direction, and the limiting portion is configured for limiting the flat tube group in the first direction; and a second assembly, at least part of which is movable in the first direction, in which a height direction of the first assembly is defined as a second direction, at least part of the second assembly is located above the first assembly in the second direction, and the second direction is perpendicular to the first direction. The second assembly includes: a clamping member for clamping a fin group; and a press fitting member connected to the clamping member and movable in the second direction to press fit the fin group onto the flat tube group along the second direction.

The heat exchanger processing device of the embodiments of the present application has the advantages of high assembly quality and high assembly efficiency.

In some embodiments, at least part of the first assembly is movable along the first direction, and the first assembly includes a first member and a second member, which are spaced apart in the first direction. A width direction of the first assembly is defined as a third direction. The first member includes a plurality of first limiting slots, the second member includes a plurality of second limiting slots, the plurality of the first limiting slots are spaced apart in the third direction, and the plurality of the second limiting slots are spaced apart in the third direction. The plurality of the first limiting slots have a one-to-one correspondence with the plurality of the second limiting slots in the first direction, the limiting portion includes the plurality of the first limiting slots and the plurality of second the limiting slots, and the third direction is perpendicular to the first direction and the second direction.

In some embodiments, at least part of the first assembly is movable along the first direction, the first assembly includes a first member and a second member, which are spaced apart in the first direction. The first member includes a first limiting plate, the second member includes a second limiting plate, the first limiting plate and the second limiting plate are arranged opposite to each other in the first direction, and the limiting portion includes the first limiting plate and the second limiting plate.

In some embodiments, the second assembly further includes a supporting member, which is movable in the first direction, and the press fitting member is movably arranged on the supporting member in the second direction.

In some embodiments, the supporting member includes a first sub member, a second sub member, and a third sub member. The first sub member and the second sub member are spaced apart in the third direction, an end of the third sub member along its length direction is connected to the first sub member, and another end of the third sub member along its length direction is connected to the second sub member. The heat exchanger processing device further includes a guide rail, the first sub member is movably arranged on the guide rail along the first direction, and the second sub member is movably arrange on the guide rail along the first direction. A bottom of the first sub member is provided with a slide block, a bottom of the second sub member is provided with a slide block, and the slide block is movable along the first direction on the guide rail.

In some embodiments, it is further includes a third assembly, at least part of the third assembly is movable in the first direction. The third assembly includes a first limiting member, which is movable along the second direction or has a variable dimension in the second direction, in order to limit the flat tube group in a third direction, and the third direction is perpendicular to the first direction and the second direction.

### BRIEF DESCRIPTION OF THE DRAWINGS

Fig. 1 is a schematic diagram of a heat exchanger processing method according to an embodiment of the present invention.
Fig. 2 is a schematic diagram of a heat exchanger processing method according to an embodiment of the present invention.
Fig. 3 is a schematic diagram of a heat exchanger processing device according to an embodiment of the present invention.
Fig. 4 is a schematic diagram of a heat exchanger processing device according to an embodiment of the present invention.
Fig. 5 is a schematic diagram of a heat exchanger processing device according to an embodiment of the present invention.
Fig. 6 is a schematic diagram of a heat exchanger processing device according to an embodiment of the present invention.
Fig. 7 is a schematic diagram of a heat exchanger processing device according to an embodiment of the present invention.
Fig. 8 is a schematic diagram of a heat exchanger processing device according to an embodiment of the present invention.
Fig. 9 is a schematic diagram of a heat exchanger processing device according to an embodiment of the present invention.
Fig. 10 is a schematic diagram of a heat exchanger processing device according to an embodiment of the present invention.
Fig. 11 is a schematic diagram of a heat exchanger processing device according to an embodiment of the present invention.
Fig. 12 is a sectional schematic diagram of a heat exchanger processing device according to an embodiment of the present invention.
Fig. 13 is a sectional schematic diagram of a heat exchanger processing device according to an embodiment of the present invention.

Reference signs:
flat tube group 10; microchannel flat tube 100;
fin group 20, fins 200; slot hole 201;
first assembly 1; limiting portion 11; first member 12; first limiting plate 121; first limiting slot 1211; second member 13; second limiting plate 131; second limiting slot 1311; third plate 1312; fourth plate 1313; placing table 14;
second assembly 2; clamping member 21; first clamping plate 211; second clamping plate 212; press fitting member 22; first rod 221; first hole 2210; press fitting plate 222; second rod 223; second hole 2230; supporting member 23; first sub member 231; second sub member 232; third sub member 233;
third assembly 3; first limiting member 31; slot 311; slide way 32; bottom plate 33;
base 4;
guide rail 5.

### DETAILED DESCRIPTION

Embodiments of the present disclosure are described in detail below, and examples of embodiments are illustrated in accompanying drawings. Embodiments described below with reference to the accompanying drawings are illustrative and are intended to be used to explain the present disclosure, and cannot be understood as limitation of the present disclosure.

It should be noted that a first direction, a second direction, and a third direction are perpendicular to each other, such as a commonly used XYZ axis of a three coordinate system.

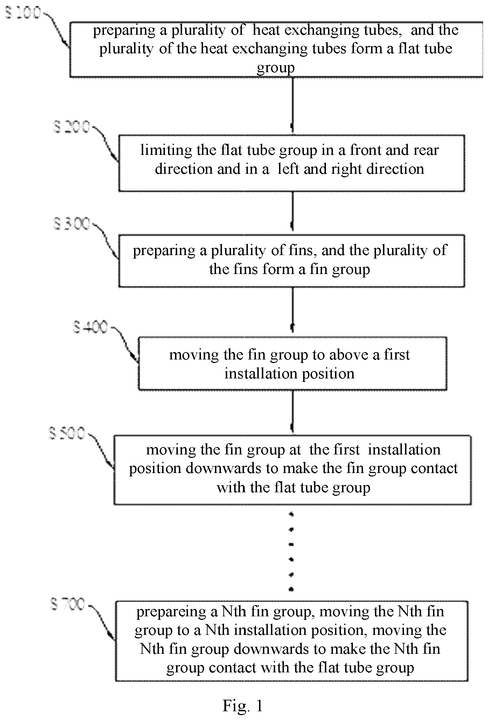

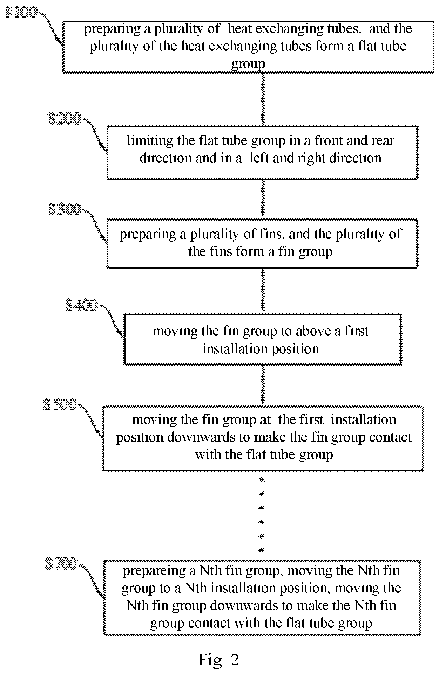

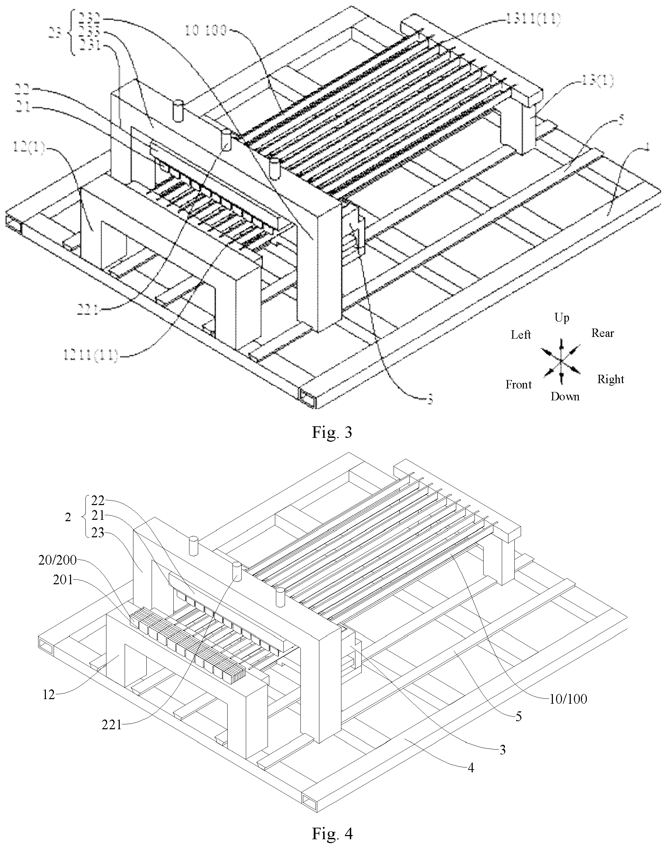

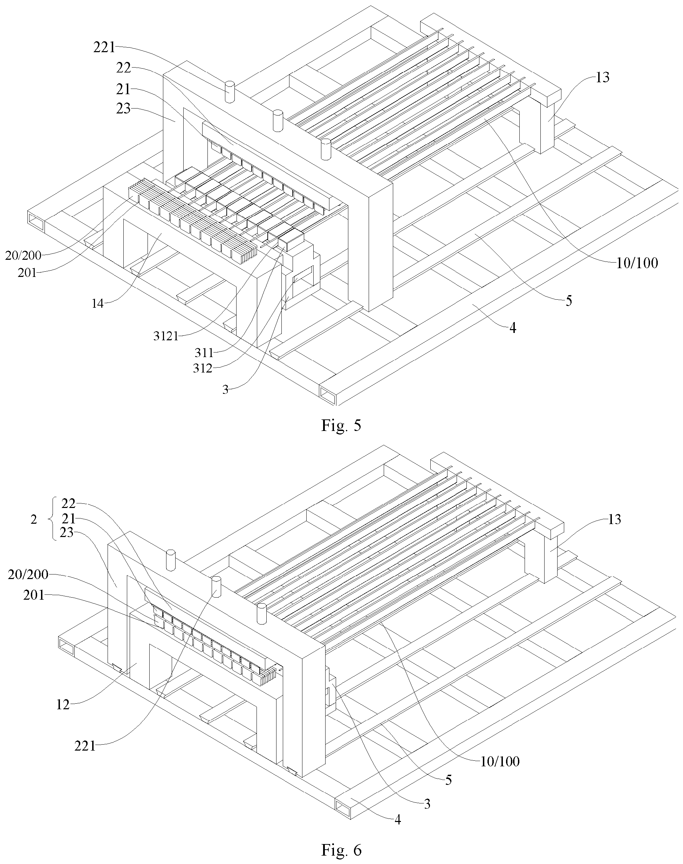

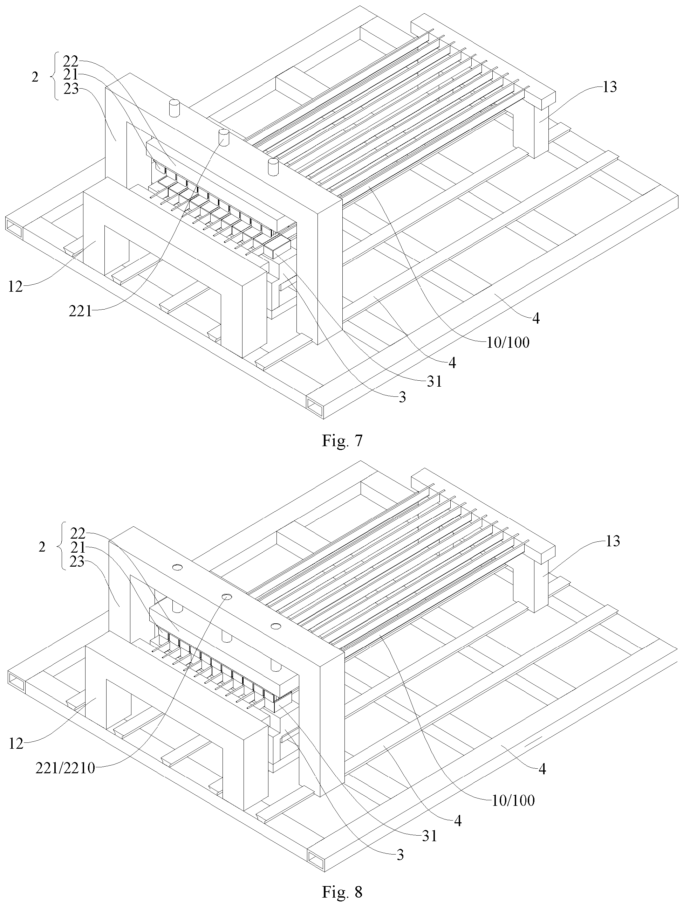

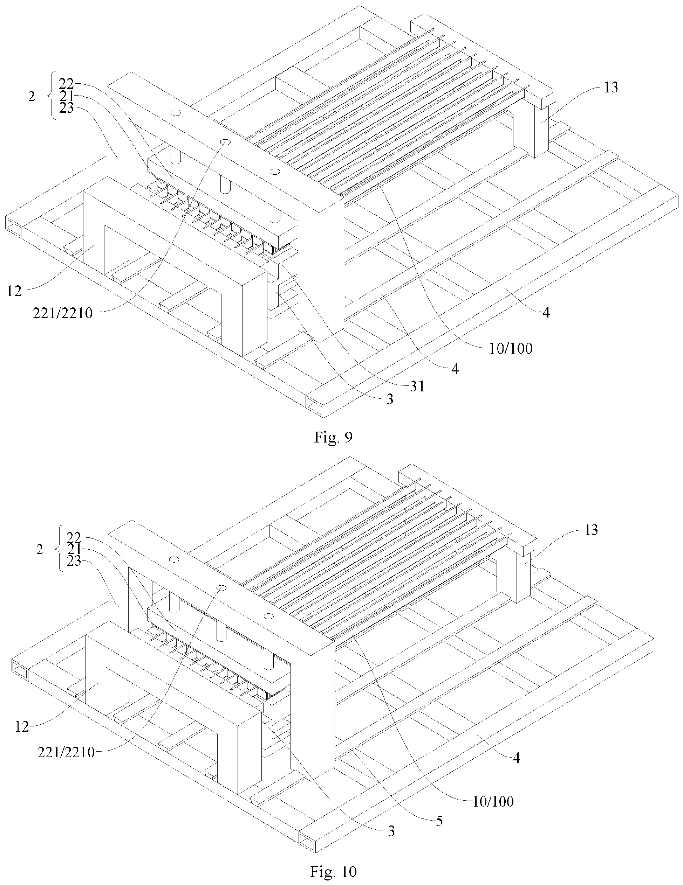

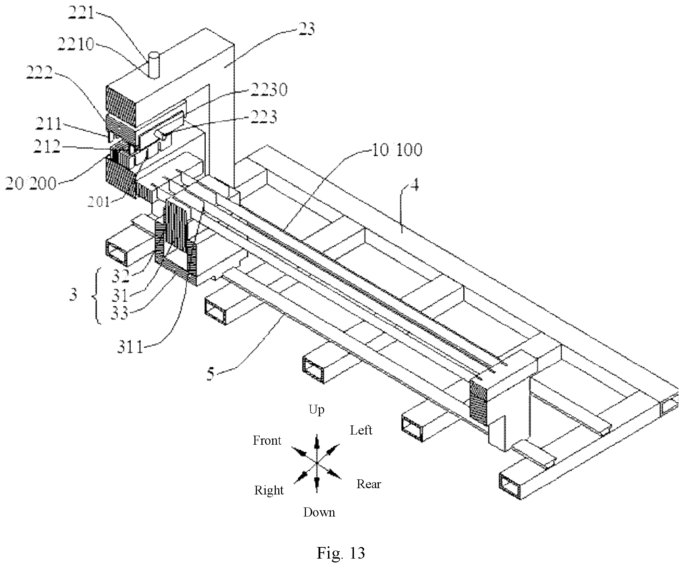

As shown in Fig. 1 and Fig. 2, a heat exchanger processing method of the embodiments of the present application includes the following steps:
S 100, providing a plurality of microchannel flat tubes 100, with the plurality of the microchannel flat tubes 100 spaced apart along their thickness direction (as shown in a left and right direction in Fig. 3), and a plurality of the microchannel flat tubes forming a flat tube group 10. Specifically, as shown in Fig. 3 to Fig. 13, there is a gap between adjacent microchannel flat tubes 100. It can be understood that the flat tube group 10 can be provided with different numbers of microchannel flat tubes 100 according to different specifications of the heat exchangers, in order to produce the heat exchangers with different specifications.
S200, limiting the flat tube group 10 in the first direction (as shown in a front and rear direction in Fig. 3), limiting the flat tube group 10 in the third direction (as shown in the left and right direction in Fig. 3), in which a length direction of the flat tube group 10 is defined as the first direction, a thickness direction of the flat tube group 10 is defined as the third direction, and the first direction is perpendicular to the third direction. Specifically, as shown in Fig. 3 to Fig. 13, the flat tube group 10 can move in an up and down direction. It can be understood that before assembly, the flat tube group 10 is positioned. After assembly is completed, the flat tube group 10 can move along the up and down direction in order to remove the assembled flat tube group 10.
S300, providing a plurality of fins 200, in which the fin 200 includes a plurality of slot holes 201 spaced apart along the length direction of the fin 200 (as shown in the left and right direction in Fig. 3), the slot hole 201 penetrates through the fin 200 along the thickness direction (as shown in the front and rear direction in Fig. 3) of the fin 200. The plurality of fins 200 are spaced apart along the first direction, and the plurality of the fins 200 form a fin group 20. The length direction of the fin group 20 is parallel to the third direction, and the thickness direction of the fin group 20 is parallel to the first direction. It can be understood that, as shown in Fig. 3 to Fig. 13, the number of the fins 200 of the fin group 20 can be provided to corresponding number according to the heat exchangers with different specifications to produce the heat exchangers with different specifications.

In some embodiments, step S300 can be performed before step S200, or steps S200 and S300 can be performed simultaneously.

S400, moving one fin group 20 to a position above a first installation position of the flat tube group 10, so that a width (as shown in the left and right direction in Fig. 3) direction of the slot hole 201 of the fin 200 is parallel to the width (as shown in the left and right direction in Fig. 3) direction of the flat tube group 10. It can be understood that, as shown in Fig. 3 to Fig. 13, there are a plurality of installation positions for the flat tube group 10. Preferably, the first installation position is located at the forefront of the plurality of the installation positions. The one fin group 20 is moved to move the one fin group 20 above the first installation position, at this time, the plurality of the slot holes 201 along the same front and rear direction on the plurality of the fins 200 correspond to one microchannel flat tube 100 in the flat tube group 10.

S500, defining the second direction (as shown in the up and down direction in Fig. 3) perpendicular to the first direction and the third direction, the width direction (as shown in the up and down direction in Fig. 3) of the flat tube group 10 is parallel to the second direction. The fin group 20 is moved along the second direction to make the fin group 20 contact with the flat tube group 10, and to insert respectively the plurality of the microchannel flat tubes 100 into the plurality of slot holes 201 of the fin group 20, and one microchannel flat tube 100 is inserted in one slot hole 201. Specifically, as shown in Fig. 3 to Fig. 13, when the fin group 20 moves downwards, one microchannel flat tube 100 can be inserted into the plurality of slot holes 201 along the length direction of the microchannel flat tube 100 on the fin group 20.

S600, providing a second fin group 20, moving the second fin group 20 to a position above a second installation position of the flat tube group 10, moving the second fin group 20 in the second direction to make the second fin group 20 contact with the flat tube group 10, and to insert the plurality of the microchannel flat tubes 100 into the plurality of the slot holes 201 of the fin group 20, with one microchannel flat tube 100 inserted into one slot hole 201; or

S700, providing the second fin group 20, moving the second fin group 20 and the flat tube group 10 to move the second fin group 20 to a position above the second installation position of the flat tube group 10, moving the second fin group 20 along the second direction to make the second fin group 20 contact with the flat tube group 10, and to insert the plurality of microchannel flat tubes 100 into the plurality of slot holes 201 of the fin group 20, with one microchannel flat tube 100 matched with one slot hole 201.

Optionally, when moving the second fin group 20, the position of the flat tube group 10 is kept unchanged, the second fin group 20 is moved to a position above the second installation position of the flat tube group 10, and then the second fin group 20 is moved downwards to install the second fin group 20 on the flat tube group 10.

Optionally, the second fin group 20 is moved while moving the flat tube group 10. The second fin group 20 is moved backward by a certain distance, the flat tube group 10 is moved forward by a certain distance, the second fin group 20 is moved to a position the rear of the first installation position, and then the second fin group 20 is moved downwards to install the second fin group 20 on the flat tube group 10. Therefore, it can reduce an assembly time in the heat exchanger processing method according to the embodiments of the present application and improve an assembly efficiency.

The heat exchanger processing method of the embodiments of the present application uses the fin group 20 composed of the plurality of the fins 200 as an installation unit, avoiding a deformation and collapse of the fin 200 caused by excessive pressure during a production of larger heat exchangers, improving a quality of the heat exchanger. Moreover, when assembling the fin group 20 and the flat tube group 10, the fin group 20 and the flat tube group 10 can be moved simultaneously, reducing the assembly time in the heat exchanger processing method according to the embodiments of the present application and thereby improving the assembly efficiency.

In some embodiments, step S600 is repeated until an installation of N fin groups 20 with one flat tube group 10 is completed, where N is greater than or equal to 2.

Specifically, according to the heat exchanger processing method of the embodiments of the present application, after positioning the flat tube group 10, one fin group 20 is assembled onto a part of the flat tube group 10 using a clamping member 21 and a press fitting member 22, and another fin group 20 is assembled onto another part of the flat tube group 10 using the clamping member 21 and the press fitting member 22 until N the fin groups 20 are assembled with one flat tube group 10.

In some embodiments, in step S400, one fin group 20 is moved along the first direction by a first preset distance, so that one fin group 20 is moved to a position above the first installation position of the flat tube group 10, where the first preset distance is greater than 0. In step S600, the second fin group 20 is moved along the first direction by a second preset distance to move the second fin group 20 to a position above the second installation position of the flat tube group 10.

Specifically, as shown in Fig. 3 to Fig. 13, a first fin group 20 is provided, and a position where the first fin group 20 is placed is at a certain distance above the first installation position of the flat tube group 10. This distance is the first preset distance, and the first preset distance is greater than 0.

It can be understood that, as shown in Fig. 3 to Fig. 13, the first fin group 20 is provided, the first fin group 20 is moved backwards by the first preset distance, then the first fin group 20 is moved downwards to insert the flat tube group 10 into the slot hole 201 and make the flat tube group 10 contact with the first fin group 20. The second fin group 20 is provided, the second fin group 20 is moved backwards by a second preset distance, and then the second fin group 20 is moved downwards to make the second fin group 20 contact with the flat tube group 10. That is to say, the first preset distance is greater than 0, and the second preset distance is greater than the first preset distance, which avoids an interference of the next fin group 20 to the previous fin group during an assembly process.

In some embodiments, in step S600, a difference between the second preset distance and the first preset distance is greater than or equal to a maximum dimension of the fin group 20 in the first direction.

It can be understood that when the difference between the second preset distance and the first preset distance is greater than the maximum dimension of the fin group 20 in the front and rear direction, there is a gap between a front end face of the second fin group 20 and a rear end face of the first fin group 20 after assembly of the second fin group 20. When the difference between the second preset distance and the first preset distance is equal to the maximum dimension of the fin group 20 in the front and rear direction, the front end face of the second fin group 20 contacts the rear end face of the first fin group 20 after assembly of the second fin group 20. That is to say, the heat exchanger processing method of the embodiments of the present application can adjust the preset distance according to the specification and design requirement of the heat exchanger, and then adjust the gap between the flat tube group 10 and the fin 200, in order to produce the heat exchangers with different specifications and models.

In other embodiments, step S700 is repeated until an installation of N fin groups 20 with one flat tube group 10 is completed, where N is greater than or equal to 2.

Specifically, according to the heat exchanger processing method of the embodiments of the present invention, after positioning the flat tube group 10, one fin group 20 is assembled onto a part of the flat tube group 10 using the clamping member 21 and the press fitting member 22, and the other two fin groups 20 are clamped and moved backwards using the clamping member 21, while the flat tube group 10 is moved forward. Then, another fin group 20 is assembled onto another part of the flat tube group 10 using the clamping member 21 and the press fitting member 22 until N the fin groups 20 are assembled with one flat tube group 10.

In some embodiments, in step S400, one fin group 20 is moved along the first direction by the first preset distance, so that one fin group 20 is moved to a position above the first installation position of the flat tube group 10, where the first preset distance is greater than 0. In step S700, the second fin group 20 is moved along the first direction by the second preset distance, and the flat tube group 10 is moved along the first direction for a third preset distance, so as to move the second fin group 20 to a position above the second installation position of the flat tube group 10.

Specifically, as shown in Fig. 3 to Fig. 13, the first fin group 20 is provided, a position where the fin group 20 is placed is at a certain distance above the first installation position of the flat tube group 10, i.e. the first preset distance and the first preset distance is greater than 0.

It can be understood that the first fin group 20 is provided, the first fin group 20 is moved backwards by the first preset distance, and then the first fin group 20 is moved downwards to make the first fin group 20 contact with the flat tube group 10. The second fin group 20 is provided, the second fin group 20 is moved backwards by the second preset distance. The flat tube group 10 is moved forward by the third preset distance. The second fin group 20 is moved to a position above the second installation position of the flat tube group 10, and then the second fin group 20 is moved downwards, so as to make the second fin group 20 contact with the flat tube group 10. That is to say, both the second preset distance and the third preset distance are less than the first preset distance, which can reduce a moving distance of the fin group 20 and improve the assembly efficiency of the fin group 20. Therefore, the heat exchanger processing method of the embodiments of the present application has the advantages of high assembly quality and high assembly efficiency.

In some embodiments, in step S700, a sum of the second preset distance and the third preset distance is L, and the difference between L and the first preset distance is greater than or equal to the maximum dimension of the fin group 20 in the first direction.

It can be understood that the difference between L and the first preset distance is greater than the maximum dimension of the fin group 20 in the front and rear direction. There is a gap between the front end face of the second fin group 20 and the rear end face of the first fin group 20 after assembly of the second fin group 20. The difference between L and the first preset distance is equal to the maximum dimension of the fin group 20 in the front and rear direction. The front end face of the second fin group 20 contacts the rear end face of the first fin group 20 after assembly of the second fin group 20. That is to say, when L is the sum of the second preset distance and the third preset distance, the difference between L and the first preset distance is greater than the maximum dimension of the fin group 20 in the front and rear direction to ensure that there is a distance between the fin group 20 and the flat tube group 10 during assembly, which reduces the deformation of the fins 200 and avoids the collapse, thereby improving the assembly efficiency and assembly quality of the heat exchanger processing device in the embodiments of the present invention.

In some embodiments, the difference between the second preset distance and the third preset distance is L, and the difference between L and the first preset distance is greater than or equal to the maximum dimension of the fin group 20 in the first direction.

It can be understood that the difference between L and the first preset distance is equal to the maximum dimension of fin group 20 in the front and rear direction. The distance between the rear end face of the first fin group 20 and the front end face of the second fin group 20 is twice the maximum dimension of the fin group 20 in the front and rear direction after assembly of the second fin group 20. The difference between L and the first preset distance is greater than the maximum dimension of the fin group 20 in the front and rear direction. The distance between the rear end face of the first fin group 20 and the front end face of the second fin group 20 is greater than twice the maximum dimension of the fin group 20 in the front and rear direction. That is to say, L is a minimum value, and the distance between the two adjacent fin groups 20 after assembly is twice the maximum dimension of the fin group 20 in the front and rear direction, which further limits the installation gap of the plurality of the fin groups 20, so as to improve an adaptability of the heat exchanger processing device in the embodiments of the present invention.

The heat exchanger processing device of the embodiments of the present invention is described below with reference to the accompanying drawings.

As shown in Fig. 3 to Fig. 13, the heat exchanger processing device of the embodiments of the present application includes a first assembly 1, a second assembly 2, and a base 4.

The first assembly 1 is configured to place the flat tube group 10, and the first assembly 1 includes a limiting portion 11. The length direction of the first assembly 1 is defined as the first direction, and the limiting portion 11 is configured to limit the flat tube group 10 in the first direction. At least part of the second assembly 2 is movable in the first direction, and a height direction of the first assembly 1 is defined as the second direction. At least part of the second assembly 2 is located above the first assembly 1 in the second direction, and the second direction is perpendicular to the first direction.

The second assembly 2 includes the clamping member 21 and the press fitting member 22. The clamping member 21 is configured to clamp the fin group 20, and the press fitting member 22 is connected to the clamping member 21. The press fitting member 22 can move in the second direction to press fit the fin group 20 onto the flat tube group 10 along the second direction.

The clamping member 21 includes a first clamping plate 211 and a second clamping plate 212, the first clamping plate 211 and/or the second clamping plate 212 is movable along the front and rear direction. The first clamping plate 211 and the second clamping plate 212 are arranged parallel along the front and rear direction, and the length direction of the first clamping plate 211 and the length direction of the second clamping plate 212 are both parallel to the left and right direction.

That is to say, the first clamping plate 211 moves along the front and rear direction, and the second clamping plate 212 is fixedly connected to the press fitting member 22. Alternatively, the second clamping plate 212 moves along the front and rear direction, and the first clamping plate 211 is fixedly connected to the press fitting member 22. Alternatively, both the first clamping plate 211 and the second clamping plate 212 are movable along the front and rear direction. In general, the distance between the first clamping plate 211 and the second clamping plate 212 can vary, so the first clamping plate 211 and the second clamping plate 212 can be used to clamp the fin group 20, thereby achieving a function of clamping the fin 200. Moreover, the distance between the first clamping plate 211 and the second clamping plate 212 can also vary, which improves the applicability of the heat exchanger processing device of the embodiments of the present invention.

The press fitting member 22 includes a first rod 221 and a press fitting plate 222. The length direction of the first rod 221 is parallel to the up and down direction. There are a plurality of the first rods 221, and the plurality of the first rods 221 are spaced apart along the left and right direction. Lower ends of the plurality of the first rods 221 are connected to the press fitting plate 222, and upper ends of the plurality of the first rods 221 are connected to an external driving device to activate the external driving device, which can control an movement of the press fitting plate 222 in the up and down direction. The length direction of the press fitting plate 222 is parallel to the left and right direction, the width direction of the press fitting plate 222 is parallel to the front and rear direction, and the thickness direction of the press fitting plate 222 is parallel to the up and down direction.

Specifically, as shown in Fig. 3 to Fig. 13, the thickness direction of the base 4 is parallel to the up and down direction. The first assembly 1 is arranged on the base 4, a part of the first assembly 1 can slide along the front and rear direction on the base 4, and the other part of the first assembly 1 is fixedly connected to the base 4. Alternatively, the first assembly 1 can be movably arranged on the base 4 along the front and rear direction. The first assembly 1 also includes a placing table 14, and a lower end of the placing table 14 is fixedly connected to the base 4. The width direction of the placing table 14 is parallel to the left and right direction. The placing table 14 can place the fin group 20 on the placing table 14, so that the clamping member 21 can clamp.

The second assembly 2 is movably arranged on the base 4 along the front and rear direction. The flat tube group 10 can be detachably placed on the limiting portion 11, the second assembly 2 is provided with a first hole 2210 that matches with the first rod 221, and the press fitting member 22 is located below the first hole 2210. There are a plurality of the first holes 2210, and the plurality of the first holes 2210 correspond to the plurality of the first rods 221 one by one. When the external driving device is activated, the first rod 221 penetrates through the first hole 2210 and drives the press fitting member 22 to move up and down. The first clamping plate 211 is fixedly connected to the press fitting member 22, the press fitting member 22 also includes a second rod 223, and the length of the second rod 223 is parallel to the front and rear direction. There are a plurality of the second rods 223, the plurality of the second rods 223 are spaced apart along the left and right direction, and a front end of the second rod 223 is fixedly connected to a rear end of the press fitting member 222. The second clamping plate 212 is provided with a second hole 2230 that matches with the plurality of the second rods 223. The second clamping plate 212 is connected to another driving device, so that the driving device can control the second clamping plate 212 to move along the front and rear direction after activation, thereby realizing a clamping function of the heat exchanger processing device of the embodiments of the present invention. An upper part of the second assembly 2 is located above the first assembly 1, and the clamping member 21 is located below the press fitting member 22, so that the clamping member 21 can clamp the fin group 20 from the placing table 14 through the matching of the first clamping plate 211 and the second clamping plate 212, then the press fitting plate 222 of the press fitting member 22 is moved downwards to press the fin group 20 towards the flat tube group 10.

It can be understood that cross-sectional shapes of the first rod 221 and the second rod 223 can be circular or polygonal, and the clamping member 21 and the press fitting member 22 are respectively provided with different driving devices to avoid the interference during clamping and pressing.

The heat exchanger processing device in the embodiments of the present invention combines the plurality of the fin groups 20 to form the fin group 20, and then assembles the fin group 20 with the flat tube group 10 to avoid the deformation and collapse of the fin 200 caused by excessive pressure, thereby improving assembly quality and assembly efficiency.

In some embodiments, as shown in Fig. 3 to Fig. 13, at least part of the first assembly 1 can move along the first direction. The first assembly 1 includes a first member 12 and a second member 13, and the first member 12 and the second member 13 are spaced apart in the first direction. The width direction of the first assembly 1 is defined as the third direction. The first member 12 includes a plurality of first limiting slots 1211, the second member 13 includes a plurality of second limiting slots 1311, the plurality of the first limiting slots 1211 are spaced apart in the third direction, the plurality of the second limiting slots 1311 are spaced apart in the third direction, and the plurality of the first limiting slots 1211 have a one-to-one correspondence with the plurality of the second limiting slots 1311 in the first direction. The limiting portion 11 includes the plurality of the first limiting slots 1211 and the plurality of the second limiting slots 1311, and the third direction is perpendicular to the first direction and the second direction.

Specifically, as shown in Fig. 3 to Fig. 13, the first member 12 is located in front of the second member 13, and the first limiting slot 1211 and the second limiting slot 1311 corresponding along the front and rear direction can match one microchannel flat tube 100. The one microchannel flat tube 100 can be clamped with its corresponding the first limiting slot 1211 and the second limiting slot 1311, so that the flat tube group 10 can be detachably arranged on the limiting portion 11.

Optionally, the first member 12 is movably arranged on the base 4, and the second member 13 is fixedly connected to the base 4; alternatively, the first member 12 is fixedly connected to the base 4, and the second member 13 is movably arranged on the base 4; alternatively, the first member 12 and the second member 13 is movably arranged on the base 4, which is enable the heat exchanger processing device of the embodiments of the present application to adapt to the flat tube groups 10 with different lengths, thereby improving the applicability of the heat exchanger processing device of the embodiments of the present application.

In other embodiments, at least part of the first assembly 1 can move along the first direction. The first assembly 1 includes the first member 12 and the second member 13, and the first member 12 and the second member 13 are spaced apart in the first direction. The first member 12 includes a first limiting plate 121, the second member 13 includes a second limiting plate 131, the first limiting plate 121 and the second limiting plate 131 are arranged opposite to each other in the first direction, and the limiting portion 11 includes the first limiting plate 121 and the second limiting plate 131.

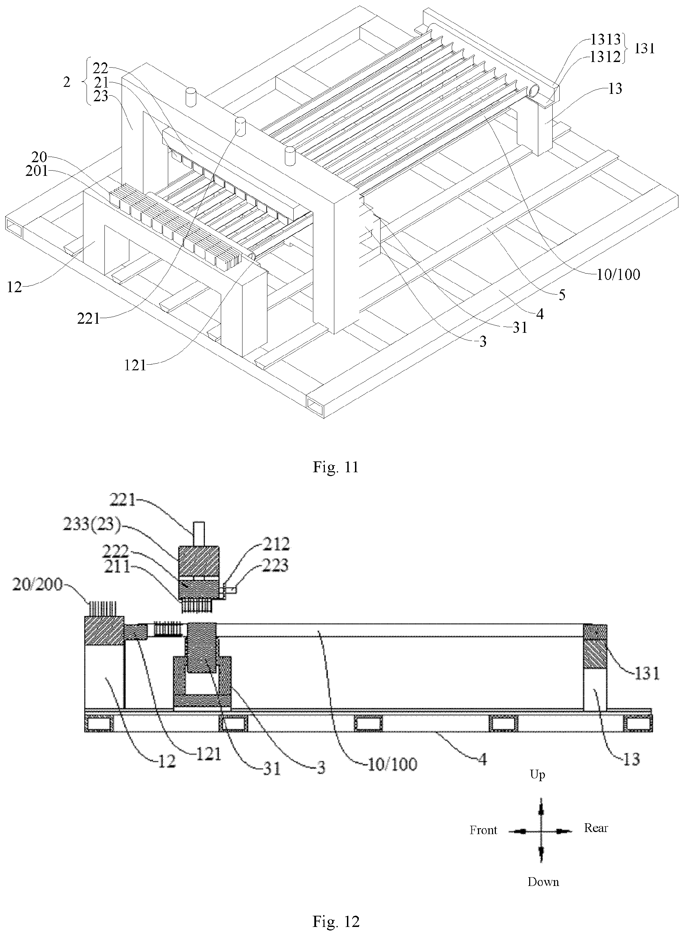

Specifically, as shown in Fig. 11, the flat tube group 10 is further provided with a collecting tube, whose length direction is parallel to the left and right direction. There are two collecting tubes, the two collecting tubes are relatively arranged at the front and rear ends of the flat tube group along the front and rear direction. The flat tube group 10 also includes a front end opening and a rear end opening. The front end opening of the flat tube group 10 is connected to the collecting tube located in front of the flat tube group 10, and the rear end opening of the flat tube group 10 is connected to the collecting tube located behind the flat tube group 10. The first member 12 is located in front of the second member 13. The first limiting plate 121 has a first plate and a second plate, the length direction of the first plate and the second plate is parallel to the left and right direction, the width direction of the first plate is parallel to the up and down direction, and the width direction of the second plate is parallel to the front and rear direction. The lower end of the first plate is connected to the front end of the second plate, and the first plate is located in front of the second plate. The second limiting plate 131 has a third plate 1312 and a fourth plate 1313. The length direction of the third plate 1312 and the fourth plate 1313 is parallel to the left and right direction, the width direction of the third plate 1312 is parallel to the front and rear direction, and the width direction of the fourth plate 1313 is parallel to the up and down direction. The lower end of the fourth plate 1313 is connected to the front end of the third plate 1312, and the fourth plate 1313 is located behind the third plate 1312. The second plate and the third plate 1312 are configured to place two collecting tubes, and the first plate and the fourth plate 1313 are configured to limit the flat tube group 10 with the collecting tube in the front and rear direction to facilitate the assembly of the flat tube group 10 and the fin group 20.

Optionally, the first limiting plate 121 can also be fixedly connected to the base 4, and the second member 13 is movably connected to the base 4; alternatively, the first limiting plate 121 is movably connected to the base 4, and the second member 13 is fixedly connected to the base; alternatively, the first limiting plate 121 and the second member 13 are movably connected to the base 4, which is enable the heat exchanger processing device of the embodiments of the present application to adapt to the flat tube groups 10 with different lengths, thereby improving the applicability of the heat exchanger processing device of the embodiments of the present application.

In some embodiments, as shown in Fig.3 to Fig. 11, the second assembly 2 further includes a supporting member 23, which is movable in the first direction, and the press fitting member 22 is movably arranged on the supporting member 23 in the second direction.

Specifically, as shown in Fig. 3 to Fig. 11, the supporting member 23 is movably arranged on the base 4 and can move along the front and rear direction. The supporting member 23 can move in the front and rear direction through the driving device or through other devices with a conveying function. The press fitting member 22 is arranged on the supporting member 23, and can move relative to the supporting member 23 in the up and down direction, so as to achieve the assembly of the fin group 20 and the flat tube group 10.

In some embodiments, as shown in Fig. 3 to Fig. 11, the supporting member 23 includes a first sub member 231, a second sub member 232, and a third sub member 233. The first sub member 231 and the second sub member 232 are spaced apart in the third direction, an end of the third sub member 233 along its length direction is connected to the first sub member 23, and another end of the third sub member 233 along its length direction is connected to the second sub member 232. The heat exchanger processing device further includes a guide rail 5, the first sub member 231 is movably arranged on the guide rail 5 in the first direction, and the second sub member 232 is movably arranged on the guide rail 5 in the first direction. A bottom of the first sub member 231 is provided with a slide block, and a bottom of the second sub member 232 is provided with a slide block, and the slide block is movable along the first direction on the guide rail 5.

Specifically, as shown in Fig. 3 to Fig. 11, the first sub member 231 is located on a left side of the second sub member 232, a left end of the third sub member 233 is connected to an upper end of the first sub member 231, and a right end of the third sub member 233 is connected to an upper end of the second sub member 232.

It can be understood that the heat exchanger processing device of the embodiments of the present application can provide the guide rail 5 according to different design requirements to enable the supporting member 23 to move in the front and rear direction. The bottom of the first sub member 231 and the bottom of the second sub member 232 are both provided with the slide block, which means that the slide block at the bottom of the first sub member 231 and the slide block at the bottom of the second sub member 232 can cooperate with the guide rail 5 to achieve a forward and backward movement of the supporting member 23, alternatively, the bottom of the first sub member 231 and the bottom of the second sub member 232 are arranged on one slide block that can cooperate with the guide rail 5 to achieve the forward and backward movement of the supporting member 23.

In some embodiments, as shown in Fig. 3 to Fig. 11, the heat exchanger processing device of the embodiments of the present application further includes a third assembly 3, at least part of the third assembly 3 is movable in the first direction. The third assembly 3 includes a first limiting member 31, which is movable along the second direction or has a variable dimension in the second direction, in order to limit the flat tube group 10 in the third direction, and the third direction is perpendicular to the first direction and the second direction.

Specifically, as shown in Fig. 3 to Fig. 11, the third assembly 3 further includes a bottom plate, which is provided with a slide slot matched with the guide rail 5, in order to enable the third assembly 3 to slide along the front and rear direction. The first limiting member 31 has a plurality of slots 311, and the plurality of the slots 311 are located on an upper surface of the first limiting member 31. The plurality of the slots 311 are spaced apart along the left and right direction, and the plurality of the slots 311 correspond one-to-one with the plurality of the microchannel flat tubes 100 of the flat tube group 10, so that when the plurality of the microchannel flat tubes 100 are inserted into the plurality of the slots 311, the first limiting member 31 can support the flat tube group 10, thereby improving the assembly effect of the heat exchanger processing device of the embodiments of the present invention. A reset element is arranged between the first limiting member 31 and the third assembly 3, the reset element can be a spiral spring or other elastic element to achieve a reset function of the first limiting member 31. The third assembly 3 is provided with a slide way 32 that matches the first limiting member 31. When assembling the fin group 20 and the flat tube group 10, the fin group 20 contacts the upper surface of the first limiting member 31 and continues to move downwards, and the first limiting member 31 can move downwards in the slide way 32. After assembly is completed, the first limiting member 31 can be restored to a state when in contact with the fin group 20 through the reset element, so that the first limiting member 31 can limit the next fin group 20.

As shown in Fig. 3 to Fig. 13, the plurality of the slot holes 201 divide the fin group 20 into a plurality of fin units, and the plurality of the slots 311 divide the limiting portion 312 into a plurality of limiting blocks. The number of limiting blocks is greater than or equal to the number of fin 200 units, and a cross-sectional area of the limiting block along the front and rear direction is greater than a projection area of the fin 200 unit in the up and down direction. When assembling the fin group 20 and the flat tube group 10, the lower ends of the plurality of the fin 200 units can contact with the plurality of the limiting blocks, which reduces the deformation of the fin 200 and avoids the collapse, thereby improving the assembly efficiency and assembly quality of the heat exchanger processing device in the embodiments of the present invention.

The heat exchanger processing device of the embodiments of the present invention is provided with a plurality of the guide rails 5, the length direction of the plurality of the guide rails 5 is parallel to the front and rear direction. When the first assembly 1, the second assembly 2 and the third assembly 3 are movably arranged on the base 4, bottoms of the first assembly 1, the second assembly 2, and the third assembly 3 are all provided with the slide slot that match the guide rails 5, so that the first assembly 1, the second assembly 2 and the third assembly 3 can slide along the front and rear direction on the base 4.

Optionally, the heat exchanger processing device of the embodiments of the present application can also be provided with a plurality of the slide slot, and the length direction of the plurality of the slide slots is parallel to the front and rear direction. When the first assembly 1, the second assembly 2 and the third assembly 3 can be movably arranged on the base 4, bottoms of the first assembly 1, the second assembly 2 and the third assembly 3 are all provided with a sliding rail that match the slide slot, so that the first assembly 1, second assembly 2, and third assembly 3 can slide along the front and rear direction on the base 4.

In the description of the present invention, it should be understood that orientations or position relationships indicated by terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" , etc. are based on the orientations or position relationships illustrated in the accompanying drawings, and are only for convenience of describing the present invention and simplifying the description, rather than indicating or implying that devices or components referred to must have a particular orientation, be constructed and operated in the particular orientation. Therefore, it cannot be understood as a limitation on the present invention.

In addition, terms "first" and "second" are only used to describe the purpose and cannot be understood as indicating or implying relative importance or implying the quantity of technical features indicated. Therefore, features limited to "first" and "second" may explicitly or implicitly include at least one of these features. In the description disclosed herein, "a plurality of' means at least two, such as two, three, etc., unless otherwise specified with specific limitations.

In the present invention, unless otherwise specified and limited, terms "mount", "couple", "connect", "fix" and other terms should be broadly understood. For example, they may be a fixed connection, a detachable connection, or integrated. They may also be a mechanical connection, an electrical connection or communication with each other. They may be directly coupled or indirectly coupled through an intermediate medium. They may be an internal connection of two components or an interaction relationship between two components, unless otherwise specified. For ordinary those skilled in the art, specific meanings of the above terms in the present invention may be understood based on specific cases.

In the present invention, unless otherwise specified and limited, the first feature is "above" or "below" the second feature, which means that the first feature may be in direct contact with the second features, or the first feature may be in indirect contact with the second features through an intermediate media. Moreover, if the first feature is "on", "above" and "on top of' the second feature, which means that the first feature is directly or diagonally above the second feature, or simply indicates that the first feature is horizontally higher than the second feature. The first feature is "under", "below" and "on bottom of" the second feature, which means that the first feature is directly or diagonally below the second feature, or simply indicates that the horizontal height of the first feature is less than that of the second feature.

In the present invention, terms "an embodiment", "some embodiments", "an example", "a specific examples", or "some examples" means that a specific feature, structure, material, or characteristic described in connection with embodiments or examples is included in at least one embodiment or example of the present invention. In this specification, the illustrative expressions of the above terms do not necessarily refer to the same embodiments or examples. Moreover, the specific feature, structure, material, or characteristic described may be combined in any suitable manner in one or more embodiments or examples. In addition, those skilled in the art may connect and combine different embodiments or examples as well as features of different embodiments or examples described in this specification, without conflicting with each other.

Although embodiments of the present invention have been illustrated and described above, it may be understood that the above embodiments are illustrative and cannot be understood as a limitation of the present invention. Those ordinary skilled in the art may make changes, modifications, alternatives, and variations to the above embodiments within the scope of the present invention.

All embodiments of the present invention may be executed separately or in combination with other embodiments, all of which are considered within the scope of protection required by the present invention.

## Claims

**1.** A heat exchanger processing method, comprising following steps:
S100, providing a plurality of microchannel flat tubes, wherein the plurality of the microchannel flat tubes are spaced apart along their thickness direction, and the plurality of the microchannel flat tubes form a flat tube group;
S200, limiting the flat tube group in a first direction, limiting the flat tube group in a third direction, wherein a length direction of the flat tube group is defined as the first direction, a thickness direction of the flat tube group is defined as the third direction, and the first direction is perpendicular to the third direction;
S300, providing a plurality of fins, wherein the fin comprises a plurality of slot holes spaced apart along a length direction of the fin, the slot hole penetrates through the fin along a thickness direction of the fin, the plurality of the fins are spaced apart along the first direction, the plurality of the fins form a fin group, a length direction of the fin group is parallel to the third direction, and a thickness direction of the fin group is parallel to the first direction;
S400, moving one fin group to a position above a first installation position of the flat tube group, so that a width direction of the slot hole of the fin is parallel to a width direction of the flat tube group;
S500, defining a second direction perpendicular to the first direction and the third direction, wherein the width direction of the flat tube group is parallel to the second direction; and moving the fin group along the second direction to make the fin group contact with the flat tube group, and to insert the plurality of the microchannel flat tubes into the plurality of the slot holes of the fin group, with one microchannel flat tube inserted into one slot hole;
S600, providing a second fin group, moving the second fin group to a position above a second installation position of the flat tube group, moving the second fin group along the second direction to make the second fin group contact with the flat tube group, and to insert the plurality of the microchannel flat tubes into the plurality of the slot holes of the fin group, with one microchannel flat tube inserted into one slot hole; or
S700, providing a second fin group, moving the second fin group and the flat tube group to move the second fin group to a position above a second installation position of the flat tube group, moving the second fin group along the second direction to make the second fin group contact with the flat tube group, and to insert the plurality of the microchannel flat tubes into the plurality of the slot holes of the fin group, with one microchannel flat tube matched with one slot hole.

**2.** The heat exchanger processing method according to claim 1, wherein step S600 is repeated until an installation of N fin groups with one flat tube group is completed, where N is greater than or equal to 2.

**3.** The heat exchanger processing method according to claim 1, wherein step S700 is repeated until an installation of N fin groups with one flat tube group is completed, where N is greater than or equal to 2.

**4.** The heat exchanger processing method according to claim 1 or 2, wherein in step S400, one fin group is moved along the first direction by a first preset distance to move the fin group to a position above the first installation position of the flat tube group, where the first preset distance is greater than 0;
in step S600, the second fin group is moved along the first direction by a second preset distance to move the second fin group to a position above the second installation position of the flat tube group.

**5.** The heat exchanger processing method according to claim 1 or 3, wherein in step S400, one fin group is moved along the first direction by a first preset distance to move the fin group to a position above the first installation position of the flat tube group, where the first preset distance is greater than 0;
in step S700, the second fin group is moved along the first direction by a second preset distance, and the flat tube group is moved along the first direction by a third preset distance, so as to move the second fin group to a position above the second installation position of the flat tube group.

**6.** The heat exchanger processing method according to claim 4, wherein in step S600, a difference between the second preset distance and the first preset distance is greater than or equal to a maximum dimension of the fin group in the first direction.

**7.** The heat exchanger processing method according to claim 5, wherein a sum of the second preset distance and the third preset distance is L, and a difference between L and the first preset distance is greater than or equal to a maximum dimension of the fin group in the first direction.

**8.** The heat exchanger processing method according to claim 5, wherein a difference between the second preset distance and the third preset distance is L, and a difference between L and the first preset distance is greater than or equal to a maximum dimension of the fin group in the first direction.

**9.** A heat exchanger processing device, comprising:
a first assembly for placing a flat tube group, wherein the first assembly comprises a limiting portion, a length direction of the first assembly is defined as a first direction, and the limiting portion is configured for limiting the flat tube group in the first direction; and
a second assembly, wherein at least part of the second assembly is movable in the first direction, a height direction of the first assembly is defined as a second direction, at least part of the second assembly is located above the first assembly in the second direction, the second direction is perpendicular to the first direction, and the second assembly comprises:
a clamping member for clamping a fin group; and
a press fitting member connected to the clamping member, wherein the press fitting member is movable in the second direction to press fit the fin group onto the flat tube group along the second direction.

**10.** The heat exchanger processing device according to claim 9, wherein at least part of the first assembly is movable along the first direction, the first assembly comprises a first member and a second member, the first member and the second member are spaced apart in the first direction, a width direction of the first assembly is defined as a third direction, the first member comprises a plurality of first limiting slots, the second member comprises a plurality of second limiting slots, the plurality of the first limiting slots are spaced apart in the third direction, the plurality of the second limiting slots are spaced apart in the third direction, and the plurality of the first limiting slots have a one-to-one correspondence with the plurality of the second limiting slots in the first direction, the limiting portion comprises the plurality of the first limiting slots and the plurality of the second limiting slots, and the third direction is perpendicular to the first direction and the second direction.

**11.** The heat exchanger processing device according to claim 9, wherein at least part of the first assembly is movable along the first direction, the first assembly comprises a first member and a second member, the first member and the second member are spaced apart in the first direction, the first member comprises a first limiting plate, the second member comprises a second limiting plate, the first limiting plate and the second limiting plate are arranged opposite to each other in the first direction, and the limiting portion comprises the first limiting plate and the second limiting plate.

**12.** The heat exchanger processing device according to claim 9, wherein the second assembly further comprises a supporting member, the supporting member is movable in the first direction, and the press fitting member is movably arranged on the supporting member in the second direction.

**13.** The heat exchanger processing device according to claim 12, wherein the supporting member comprises a first sub member, a second sub member, and a third sub member, the first sub member and the second sub member are spaced apart in the third direction, an end of the third sub member along a length direction of the third sub member is connected to the first sub member, and another end of the third sub member along the length direction of the third sub member is connected to the second sub member, the heat exchanger processing device further comprises a guide rail, the first sub member is movably arranged on the guide rail along the first direction, the second sub member is movably arrange on the guide rail along the first direction, and a bottom of the first sub member is provided with a slide block, a bottom of the second sub member is provided with a slide block, and the slide block is movable on the guide rail along the first direction.

**13.** The heat exchanger processing device according to any one of claims 9-13, further comprising a third assembly, wherein at least part of the third assembly is movable in the first direction, the third assembly comprises a first limiting member, the first limiting member is movable along the second direction or the first limiting member has a variable dimension in the second direction, in order to limit the flat tube group in the third direction, and the third direction is perpendicular to the first direction and the second direction.
